# EUROPÄISCHE PATENTANMELDUNG

(11) **EP 4 552 480 A1**
(43) Veröffentlichungstag der Anmeldung: **14.05.2025**
(21) Anmeldenummer: 24208408.5
(22) Anmeldetag: 23.10.2024
(51) Int. Cl.: A01G 13/27

(54) **SCHUTZVORRICHTUNG FÜR TERMINALTRIEBE VON BÄUMEN**

(30) Priorität: 07.11.2023 DE 102023130810
(71) Anmelder: Neo-plastic Dr. Doetsch Diespeck GmbH, 91456 Diespeck (DE)
(72) Erfinder: Lemke, Thomas, 91456 Diespeck (DE); Henkel, Achim, 91456 Diespeck (DE); Freiherr von und zu Franckenstein, Hubertus, 91456 Diespeck (DE)
(74) Vertreter: Hafner & Kohl PartmbB

(57) **Zusammenfassung**

Verbissschutzvorrichtung (10) für Terminaltriebe von Bäumen und Verfahren zur Herstellung einer solchen.

## Beschreibung

Die Erfindung betrifft eine Verbissschutzvorrichtung für Terminaltriebe von Bäumen, insbesondere von Nadelbäumen, umfassend ein einen Innenraum umschließendes Kopfteil, wobei an dem Kopfteil ein oder mehrere längliche Befestigungselemente zur, insbesondere federnden, Befestigung der Verbissschutzvorrichtung an wenigstens einem vermittels der Verbissschutzvorrichtung gegen Verbiss zu schützenden Terminaltrieb angeordnet oder ausgebildet sind, wobei das Kopfteil wenigstens eine Öffnung zur Belüftung des von dem Kopfteil umschlossenen Innenraums aufweist.

Entsprechende Verbissschutzvorrichtungen sind aus dem Stand der Technik dem Grunde nach in unterschiedlichen Ausführungen bekannt.

Ein konkretes Beispiel einer entsprechenden Verbissschutzvorrichtung zeigt das Dokument DE 10 2022 000 793 A1. Die dort beschriebene Konfiguration einer Verbissschutzvorrichtung sieht ein Kopfteil vor, von welchem materialeinstückig zur federnden Festlegung am Terminaltrieb vorgesehene längliche Befestigungselemente nach unten wegstehen. Das Kopfteil ist zudem mit Löchern versehen, welche der Gewährleistung eines guten Mikroklimas dienen sollen.

In der Praxis hat es sich gezeigt, dass es durch das Vorsehen entsprechender Löcher möglich ist, dass sich Terminaltriebe durch die Löcher erstrecken, mithin bisweilen durch die Löcher wachsen, was die bestimmungsgemäße Aufgabe und Funktion der Verbissschutzvorrichtung erheblich beeinträchtigen kann.

Hiervon ausgehend liegt der vorliegenden Erfindung die Aufgabe zugrunde, eine verbesserte Verbissschutzvorrichtung anzugeben.

Die Aufgabe wird durch eine Verbissschutzvorrichtung gemäß dem vorliegenden unabhängigen Anspruch 1 gelöst. Die Gegenstände der hierzu abhängigen Ansprüche betreffen mögliche Ausführungsformen der Verbissschutzvorrichtung gemäß dem vorliegenden unabhängigen Anspruch 1. Die Aufgabe wird ferner durch ein Verfahren zur Herstellung einer Verbissschutzvorrichtung gemäß dem vorliegenden unabhängigen Anspruch 10 gelöst.

Ein erster Aspekt der Erfindung betrifft eine Verbissschutzvorrichtung für Terminaltriebe von Bäumen, insbesondere von Nadelbäumen bzw. Nadelhölzern. Die hierin beschriebene Verbissschutzvorrichtung dient sonach im Allgemeinem dem Verbissschutz von Terminaltriebe von Bäumen, insbesondere von Nadelbäumen bzw. Nadelhölzern.

Die Verbissschutzvorrichtung umfasst ein Kopfteil. Das Kopfteil begrenzt bzw. umschließt typischerweise einen Innenraum. Das Kopfteil weist sonach typischerweise eine einen Innenraum begrenzende bzw. umschließende dreidimensionale Grundform auf. Der Innenraum ist typischerweise einseitig offen. Das Kopfteil kann daher z. B. schalenartig bzw. -förmig, insbesondere kalottenartig bzw. -förmig, mithin im Allgemeinen mit einer gewölbten Grundform ausgebildet sein.

An dem Kopfteil sind ein oder mehrere längliche Befestigungselemente zur, insbesondere federnden, Befestigung der Verbissschutzvorrichtung an wenigstens einem vermittels der Verbissschutzvorrichtung gegen Verbiss zu schützenden Terminaltrieb angeordnet oder ausgebildet. Die länglichen Befestigungselemente können insbesondere federnd ausgebildet sein und demnach zur federnden Befestigung der Verbissschutzvorrichtung an einem Terminaltrieb eingerichtet sein. Die Verbissschutzvorrichtung kann daher mit den länglichen Befestigungselementen federnd und/oder formschlüssig an einem gegen Verbiss zu schützenden Terminaltrieb anliegen, um mit diesem mitwachsen zu können.

Die länglichen Befestigungselemente ragen typischerweise in einer definierten Richtung von dem Kopfteil ab. Die definierte Richtung kann eine sich (im Wesentlichen) parallel zu einer durch eine Symmetrie- oder Zentralachse des Kopfteils definierte Richtung sein.

Das Kopfteil weist wenigstens eine Öffnung, insbesondere wenigstens eine das Kopfteil vollständig durchsetzende Durchgangsöffnung, auf. Die wenigstens eine Öffnung dient insbesondere zur Belüftung des von dem Kopfteil umschlossenen Innenraums. Die wenigstens eine Öffnung dient sonach insbesondere dazu, das Kopfteil bzw. den von dem Kopfteil umschlossenen Innenraum zu belüften, insbesondere um eine zweckmäßige Klimatisierung des von dem Kopfteil umschlossenen Innenraums zu realisieren bzw. zu gewährleisten. Die wenigstens eine Öffnung spannt daher typischerweise wenigstens eine freie Fläche auf. Über die wenigstens eine freie Fläche kann eine Belüftung des von dem Kopfteil umschlossenen Innenraums möglich sein.

Die wenigstens eine Öffnung ist durch eine Wandung des Kopfteils begrenzt. Wie sich im Weiteren ergibt, kann die die wenigstens eine Öffnung begrenzende Wandung des Kopfteils mehrere Wandungsabschnitte aufweisen.

Die wenigstens eine Öffnung kann eine rotationssymmetrische Grundform aufweisen. Die wenigstens eine Öffnung kann damit eine Symmetrie- oder Zentralachse aufweisen bzw. definieren. Eine konkrete, gleichwohl beispielhafte Ausführungsform der wenigstens einen Öffnung ist entsprechend eine kreisrunde Öffnung.

Um sicherzustellen, dass ein vermittels der Verbissschutzvorrichtung gegen Verbiss zu schützender Terminaltrieb nicht durch die wenigstens eine Öffnung in dem Kopfteil wachsen kann, was, wie eingangs erwähnt, bei aus dem Stand der Technik bekannten Verbissschutzvorrichtungen möglich ist, ist die wenigstens eine Öffnung bei der hierin beschriebenen Verbissschutzvorrichtung mit einer Sperrstruktur versehen, welche ein Durchwachsen eines Terminaltriebs durch die wenigstens eine Öffnung verhindert. Die Sperrstruktur ist sonach eingerichtet, die Fläche der wenigstens einen Öffnung, z. B. durch eine Reduzierung, zu versperren, sodass ein Durchwachsen eines Terminaltriebs durch die wenigstens eine Öffnung verhindert ist.

Derart ist eine gegenüber dem eingangs beschriebenen Stand der Technik verbesserte Verbissschutzvorrichtung gegeben.

In einer Ausführungsform kann die Sperrstruktur wenigstens ein stegartiges oder -förmiges Sperrelement umfasst. Die Fläche der wenigstens einen Öffnung kann sonach durch wenigstens ein stegartiges oder -förmiges Sperrelement reduziert werden, sodass ein Durchwachsen eines Terminaltriebs durch die wenigstens eine Öffnung verhindert ist.

Das wenigstens eine stegartige oder -förmige Sperrelement kann selbst ein oder mehrere Öffnungen, etwa in Form von Schlitzen, aufweisen, um die Belüftung des von dem Kopfteil umschlossenen Innenraums nicht zu beeinträchtigen.

In einer Ausführungsform kann sich das wenigstens eine stegartige oder -förmige Sperrelement von einem ersten Wandungsabschnitt einer die wenigstens eine Öffnung begrenzenden Wandung des Kopfteils in Richtung eines zweiten Wandungsabschnitts der die wenigstens eine Öffnung begrenzenden Wandung des Kopfteils erstrecken. Das wenigstens eine stegartige oder -förmige Sperrelement kann die Fläche der wenigstens einen Öffnung sonach in wenigstens zwei Teilflächen aufteilen, welche ihrer Größe nach gegenüber der ursprünglichen Fläche der wenigstens einen Öffnung reduziert sind, sodass ein Durchwachsen eines Terminaltriebs durch die wenigstens eine Öffnung verhindert ist.

In einer Ausführungsform kann sich das wenigstens eine stegartige oder -förmige Sperrelement von einem ersten Wandungsabschnitt einer die wenigstens eine Öffnung begrenzenden Wandung des Kopfteils vollständig bis zu einem zweiten Wandungsabschnitt der die wenigstens eine Öffnung begrenzenden Wandung des Kopfteils erstrecken.

In einer Ausführungsform kann das wenigstens eine stegartige oder -förmige Sperrelement in wenigstens zwei Abzweigungen aufgezweigt ausgebildet sein. Das wenigstens eine stegartige oder -förmige Sperrelement kann sich durch entsprechende Aufzweigung sonach verästeln, sodass ein Durchwachsen eines Terminaltriebs durch die wenigstens eine Öffnung verhindert ist.

In einer Ausführungsform kann die Sperrstruktur mehrere stegartige oder -förmige Sperrelemente umfassen. Die mehreren stegartigen oder -förmigen Sperrelemente können gleicher oder ungleicher Abmessungen sein und/oder gleiche oder ungleiche Grundformen aufweisen. Alternativ oder ergänzend können die mehreren stegartigen oder -förmigen Sperrelemente in gleichen oder unterschiedlichen Ausrichtungen und/oder Positionen angeordnet oder ausgebildet sein.

Nachfolgend werden beispielhaft und damit nicht abschließend denkbare Konfigurationsmöglichkeiten von Ausführungsformen einer Sperrstruktur mit mehreren stegartigen oder -förmigen Sperrelementen erläutert:
Beispielsweise kann sich ein erstes stegartiges oder -förmiges Sperrelement ausgehend von einem ersten Wandungsabschnitt, welcher z. B. als ein Punkt der die wenigstens eine Öffnung begrenzenden Wandung zu verstehen sein kann, einer die wenigstens eine Öffnung begrenzenden Wandung des Kopfteils in einer ersten Richtung in Richtung eines zweiten Wandungsabschnitts, welcher ebenso z. B. als ein Punkt der die wenigstens eine Öffnung begrenzenden Wandung zu verstehen sein kann, der die wenigstens eine Öffnung begrenzenden Wandung des Kopfteils erstrecken.

Ergänzend kann sich wenigstens ein weiteres stegartiges oder -förmiges Sperrelement ausgehend von dem ersten Wandungsabschnitt der die wenigstens eine Öffnung begrenzenden Wandung des Kopfteils in einer von der ersten Richtung gleichen oder verschiedenen weiteren Richtung in des zweiten Wandungsabschnitts oder in Richtung eines von dem zweiten Wandungsabschnitt verschiedenen dritten Wandungsabschnitts, welcher ebenso z. B. als ein Punkt der die wenigstens eine Öffnung begrenzenden Wandung zu verstehen sein kann, der die wenigstens eine Öffnung begrenzenden Wandung des Kopfteils erstrecken. Der zweite Wandungsabschnitt kann - dies gilt insbesondere für eine kreisrunde Geometrie der wenigstens einen Öffnung - um einen bestimmten Winkel, d. h. z. B. um einem Winkel von 180°, versetzt zu dem ersten Wandungsabschnitt angeordnet oder ausgebildet sein. Der dritte Wandungsabschnitt kann - dies gilt insbesondere für eine kreisrunde Geometrie der wenigstens einen Öffnung - um einen bestimmten Winkel, d. h. z. B. um einem Winkel ungleich 180°, insbesondere um einen Winkel von 270°, versetzt zu dem ersten Wandungsabschnitt angeordnet oder ausgebildet sein.

Alternativ oder ergänzend kann sich wenigstens ein weiteres stegartiges oder - förmiges Sperrelement ausgehend von einem von dem ersten Wandungsabschnittverschiedenen vierten Wandungsabschnitt, welcher ebenso z. B. als ein Punkt der die wenigstens eine Öffnung begrenzenden Wandung zu verstehen sein kann, der die wenigstens eine Öffnung begrenzenden Wandung des Kopfteils in einer von der ersten Richtung gleichen oder verschiedenen weiteren Richtung in des zweiten Wandungsabschnitts oder in Richtung des von dem zweiten Wandungsabschnitt verschiedenen dritten Wandungsabschnitts der die wenigstens eine Öffnung begrenzenden Wandung des Kopfteils erstrecken. Der vierte Wandungsabschnitt kann - dies gilt insbesondere für eine kreisrunde Geometrie der wenigstens einen Öffnung - um einen bestimmten Winkel, d. h. z. B. um einem Winkel von 90°, versetzt zu dem ersten Wandungsabschnitt angeordnet oder ausgebildet sein.

In einer weiteren Ausführungsform kann die Sperrstruktur wenigstens ein durch mehrere winklig zueinander angeordnete Gitterelemente gebildetes Sperrgitter umfassen. Die Sperrstruktur kann sonach gitterartig bzw. -förmig ausgebildet sein, was ebenso eine geeignete Maßnahme darstellt, um ein Durchwachsen eines Terminaltriebs durch die wenigstens eine Öffnung zu verhindern. Das Sperrgitter kann eine regelmäßige oder unregelmäßige Konfiguration aufweisen. Ebenso denkbar sind maschenartige bzw. -förmige Konfigurationen der Sperrstruktur.

In einer weiteren Ausführungsform kann die Sperrstruktur durch wenigstens eine die wenigstens eine Öffnung zumindest abschnittsweise, gegebenenfalls vollständig, verschließende zumindest gasdurchlässige, insbesondere luftdurchlässige, Membran gebildet sein. Die Sperrstruktur kann sonach als, gegebenenfalls geschlossene, jedoch gasdurchlässige, Membran ausgebildet sein, was ebenso eine geeignete Maßnahme darstellt, um ein Durchwachsen eines Terminaltriebs durch die wenigstens eine Öffnung zu verhindern. Die Gasdurchlässigkeit der Membran stellt dabei sicher, dass dennoch eine ausreichende Belüftung des durch das Kopfteil umschlossenen Innenraums möglich ist.

Unabhängig von ihrer konkreten geometrisch-konstruktiven Konfiguration kann die Sperrstruktur lösbar oder unlösbar an dem Kopfteil befestigt sein.

Eine lösbare Verbindung der Sperrstruktur an dem Kopfteil kann z. B. dadurch realisiert sein, dass das Kopfteil, insbesondere im Bereich eines Wandungsabschnitts der die wenigstens eine Öffnung begrenzenden Wandung, mit einer form- und/oder kraftschlüssigen Befestigungsschnittstelle und die Sperrstruktur mit einer hierzu korrespondierenden form- und/oder kraftschlüssigen Gegenbefestigungsschnittstelle ausgebildet ist, wobei die kopfteilseitige Befestigungsschnittstelle und die sperrstrukturseitige Gegenbefestigungsschnittstelle eingerichtet sind, unter Ausbildung einer lösbaren Befestigung der Sperrstruktur an dem Kopfteil zusammenzuwirken. Mithin können die kopfteilseitige Befestigungsschnittstelle und die sperrstrukturseitige Gegenbefestigungsschnittstelle zueinander korrespondierende form- und/oder kraftschlüssige Befestigungselemente aufweisen, welche eingerichtet sind, miteinander unter Ausbildung einer lösbaren Befestigung der Sperrstruktur an dem Kopfteil zusammenzuwirken. Nicht-abschließend aufgezählte Beispiele für entsprechende form- und/oder kraftschlüssige Befestigungselemente sind Gewinde-, Klemm-, Rast- oder Spannelemente.

Eine unlösbare Verbindung der Sperrstruktur an dem Kopfteil kann z. B. dadurch realisiert sein, dass die Sperrstruktur stoffschlüssig an dem Kopfteil befestigt ist; die Sperrstruktur kann sonach z. B. einstückig, insbesondere materileinstückig, mit dem Kopfteil ausgebildet oder durch eine stoffschlüssige Befestigungsmethode, wie z. B. Kleben oder Schweißen, insbesondere Ultraschallschweißen, stoffschlüssig an dem Kopfteil befestigt sein.

Wie erwähnt, kann das Kopfteil und die wenigstens eine Öffnung jeweils eine Symmetrie- oder Zentralachse aufweisen. Die Symmetrie- oder Zentralachse der wenigstens einen Öffnung kann koaxial mit der oder winklig zu der Symmetrie- oder Zentralachse des Kopfteils ausgerichtet bzw. angeordnet sein.

In einer Konfiguration des Kopfteils mit mehreren Öffnungen kann die Symmetrie- oder Zentralachse einer ersten Öffnung beispielsweise koaxial mit der Symmetrie- oder Zentralachse des Kopfteils angeordnet und die Symmetrie- oder Zentralachse wenigstens einer weiteren Öffnung ebenso koaxial oder winklig zu der Symmetrie- oder Zentralachse des Kopfteils ausgerichtet bzw. angeordnet sein. Sollte das Kopfteil mehrere entsprechend ausgerichtet angeordnete weitere Öffnungen aufweisen, können diese gleichmäßig oder ungleichmäßig verteilt über die Außen- bzw. Innenfläche des Kopfteils angeordnet oder ausgebildet sein.

Unabhängig von deren jeweiligen Ausrichtungen relativ zu der Symmetrie- oder Zentralachse des Kopfteils gilt für Ausführungsformen, in welchen das Kopfteil mehrere Öffnungen aufweist, dass die mehreren Öffnungen gleicher oder ungleicher Abmessungen sein und/oder gleiche oder ungleiche Grundformen aufweisen können.

In einer weiteren Ausführungsform können von dem vom Kopfteil, insbesondere materialeinstückig, erste Zapfen nach oben stehen und/oder von einem umlaufenden Rand des Kopfteils, insbesondere materialeinstückig, zweite Zapfen seitlich wegstehen. Derart kann ein guter Schutz gegen Verbiss, ein guter SchälSchutz und ein guter Fegeschutz realisiert werden. Einzelne oder mehrere Zapfen können hohl ausgeführt sein und gegebenenfalls mit dem Innenraum kommunizieren, sodass auch diese zur Belüftung beitragen können.

Auch einzelne oder mehrere der länglichen Befestigungselemente können mit Zapfen, Stacheln, etc. ausgebildet sein.

Unabhängig davon können die länglichen Befestigungselemente in Umfangsrichtung der Verbissschutzvorrichtung voneinander gleichmäßig beabstandet angeordnet oder ausgebildet sein. Dabei können die länglichen Befestigungselemente zur Symmetrie- oder Zentralachse der Verbissschutzvorrichtung hin jeweils stumpfwinkelig mit einem zum Kopfteil benachbarten ersten Schenkelabschnitt, einem daran anschließenden, zur Symmetrie- oder Zentralachse der Verbissschutzvorrichtung parallelen Befestigungsschenkeln, und einem daran anschließenden zweiten Schenkelabschnitt ausgebildet sein. Entsprechende erste und zweite Schenkelabschnitte können zum Befestigungsabschnitt hin jeweils mit konisch erweiterten Rändern ausgebildet sein. Der zwischen diesen vorgesehene Befestigungsschenkel kann mit zueinander parallelen Rändern ausgebildet sein.

Um die länglichen Befestigungselemente mit guten Federungseigenschaften zu verwirklichen, können die ersten Schenkelabschnitte der Befestigungselemente von Laschen des Kopfteils, insbesondere materialeinstückig, starr wegstehen, wobei die Laschen jeweils von einem Paar, vom Umfangsrand des Kopfteils ausgehenden Schlitzen begrenzt sein können.

Die länglichen Befestigungselemente können stumpfwinkelig geradlinig ausgebildet sein. Ebenso ist es möglich, dass die länglichen Befestigungselemente wellenförmig jeweils in einer Ebene liegend vom Kopfteil lotrecht nach unter wegstehen. Ebenso ist es möglich, dass die länglichen Befestigungselemente von Kopfteil schräg orientiert gewellt oder schraubenlinienförmig nach unten wegstehen.

Die Verbissschutzvorrichtung kann in allen Ausführungsformen aus einem duro- oder thermoplastischen Kunststoffmaterial hergestellt sein. Das Kunststoffmaterial kann einen oder mehrere Geruchsstoffe und/oder eine oder mehrere Bitterstoffe enthalten. Ebenso ist es möglich, dass das Kunststoffmaterial biologisch abbaubar und/oder biobasiert sein. Außerdem ist es möglich, dass das Kunststoffmaterial zumindest abschnittsweise farbig ist oder zumindest abschnittsweise eine farbige Beschichtung, insbesondere Oberflächenbeschichtung, aufweist.

Ein zweiter Aspekt der Erfindung betrifft ein Verfahren zur Herstellung einer Verbissschutzvorrichtung für Terminaltriebe von Bäumen bzw. Nadelhölzern. mit dem Verfahren lässt sich insbesondere eine Verbissschutzvorrichtung gemäß dem ersten Aspekt herstellen, sodass sämtliche Ausführungen im Zusammenhang mit der Verbissschutzvorrichtung gemäß dem ersten Aspekt analog für das Verfahren gemäß dem zweiten Aspekt gelten und umgekehrt.

Das Verfahren umfasst zumindest die folgenden Schritte: Bereitstellen oder Herstellen eines einen Innenraum umschließenden Kopfteils, wobei an dem Kopfteil ein oder mehrere längliche Befestigungselemente zur, insbesondere federnden, Befestigung des Verbissschutzvorrichtung an wenigstens einem vermittels der Verbissschutzvorrichtung gegen Verbiss zu schützenden Terminaltrieb angeordnet oder ausgebildet sind, wobei das Kopfteil wenigstens eine Öffnungen zur Belüftung des von dem Kopfteil umschlossenen Innenraums aufweist (erster Schritt); und Anordnen oder Ausbilden einer Sperrstruktur, welche ein Durchwachsen eines Terminaltriebs durch die wenigstens eine Öffnung verhindert, an oder in der wenigstens einen Öffnung (zweiter Schritt).

Das Herstellen des Kopfteils in dem ersten Schritt kann z. B. durch ein Spritzgießverfahren implementiert werden, was typischerweise eine fertigungstechnisch effiziente Herstellung des Kopfteils ermöglicht. Ebenso denkbar ist eine Fertigung durch 3D-Druck.

Das Ausbilden der Sperrstruktur in dem zweiten Schritt kann ebenso z. B. durch ein Spritzgießverfahren implementiert werden, was typischerweise eine fertigungstechnisch effiziente Herstellung des Kopfteils ermöglicht. Ebenso denkbar ist eine Fertigung durch 3D-Druck.

Insbesondere ist es denkbar, das Kopfteil und die Sperrstruktur in einem gemeinsamen Spritzgießverfahren auszubilden, was die Herstellung der gesamten Verbissschutzvorrichtung in effizienter Weise ermöglicht. Analoges gilt wiederum für 3D-Druck.

Einzelne Aspekte der Erfindung werden nachfolgend anhand von Ausführungsbeispielen nochmals beispielhaft erläutert; dabei zeigt:

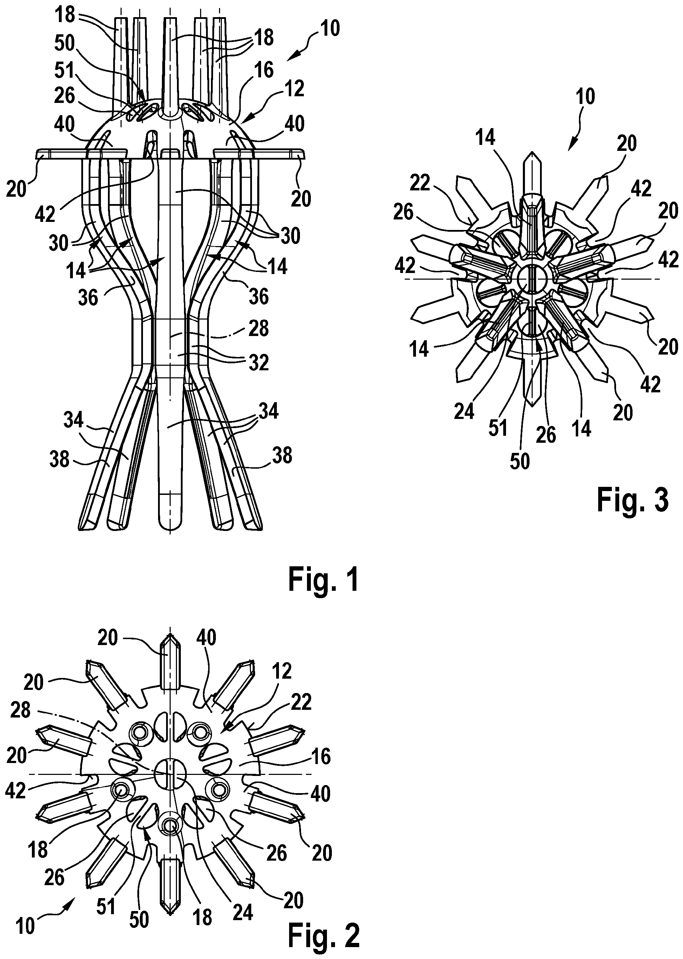

Fig. 1 eine Verbissschutzvorrichtung gemäß einem Ausführungsbeispiel in einer Seitenansicht;
Fig. 2 eine Ansicht der Verbissschutzvorrichtung gemäß Fig. 1 in Blickrichtung von oben,
Fig. 3 eine Ansicht der Verbissschutzvorrichtung gemäß Fig. 1 in Blickrichtung von unten;

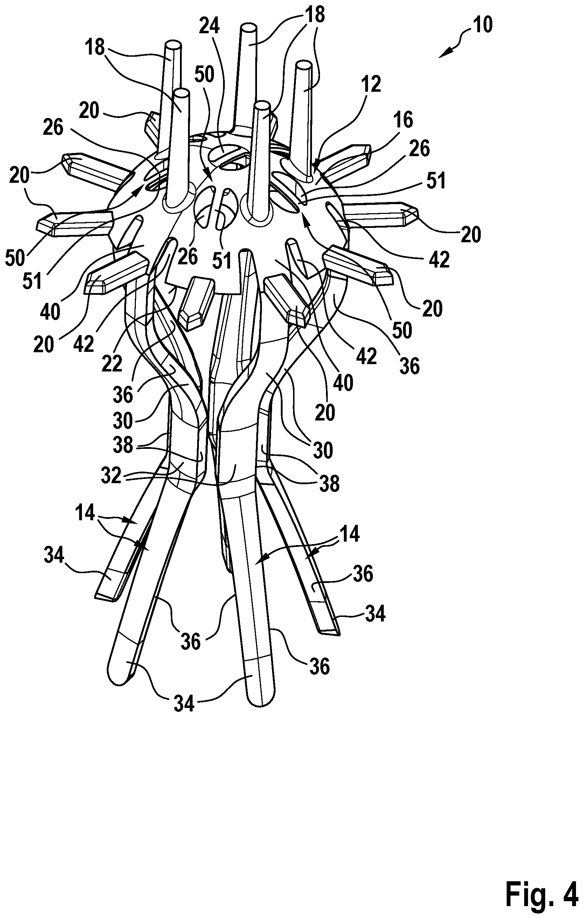

Fig. 4 eine perspektivische Ansicht der Verbissschutzvorrichtung gemäß Fig. 1 in Blickrichtung von schräg oben, und

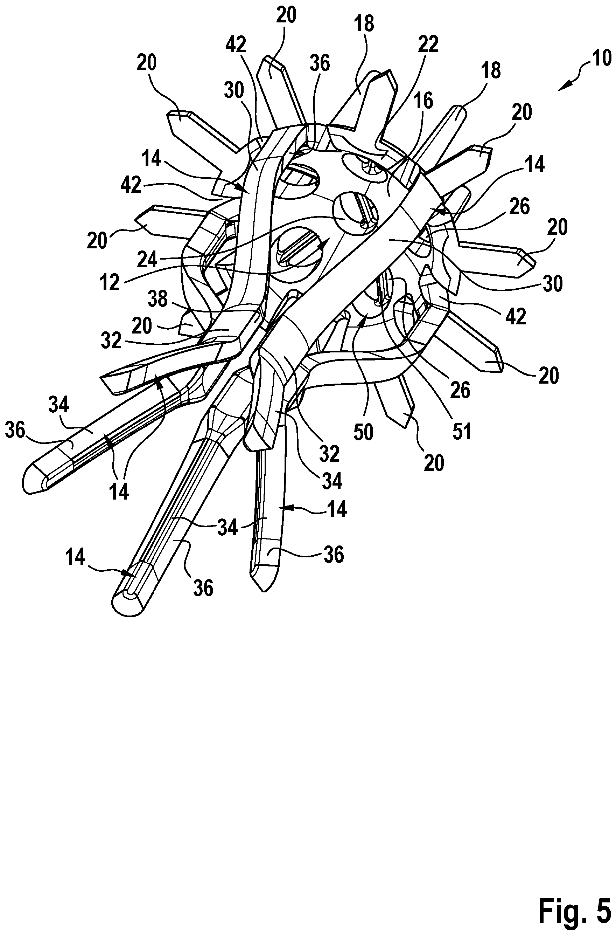

Fig. 5 eine perspektivische Ansicht der Verbissschutzvorrichtung gemäß Fig. in Blickrichtung von schräg unten.

Anhand der Figuren ist ein Ausführungsbeispiel einer z. B. aus einem Kunststoffmaterial gebildeten Verbissschutzvorrichtung 10 in verschiedenen Ansichten ersichtlich. Die Verbissschutzvorrichtung 10 ist insbesondere für Terminaltriebe von Nadelbäumen bzw. Nadelhölzern vorgesehen ist.

Die Verbissschutzvorrichtung 10 weist ein Kopfteil 12 auf, von welchem längliche Befestigungselemente 14 nach unten wegstehen. Das Kopfteil 12 ist in dem Ausführungsbeispiel als kalotten- bzw. kugelabschnittförmige ballige Kopfschale 16 ausgebildet.

An dem Kopfteil 12 sind in dem Ausführungsbeispiel erste Zapfen 18 ausgebildet, die von dem Kopfteil 12 nach oben stehen und die einen Schälschutz und Fegeschutz bilden.

Ersichtlich sind an dem Kopfteil 12 außerdem zweite Zapfen 20 ausgebildet, die vom Umfangsrand 22 des Kopfteils 12 seitlich wegstehen und die ebenfalls einen Schälschutz und Fegeschutz bilden.

Das Kopfteil 12 ist in dem Ausführungsbeispiel mit einer zentralen ersten Öffnung 24, deren Symmetrie- bzw. Zentralachse koaxial mit der Symmetrie- bzw. Zentralachse 28 des Kopfteils 12 ausgerichtet ist, und mit zweiten Öffnungen 26, deren Symmetrie- bzw. Zentralachse in dem Ausführungsbeispiel ebenso koaxial mit der Symmetrie- bzw. Zentralachse des Kopfteils 12 ausgerichtet sind, ausgebildet, die in Umfangsrichtung des Kopfteils 12 voneinander gleichmäßig beabstandet sind. Die Öffnungen 24 und 26 dienen zur Belüftung des Kopfteils 12 und dienen folglich Klimatisierungszwecken des Kopfteils 12.

Die länglichen Befestigungselemente 14 sind zur zentralen Symmetrie- bzw. Zentralachse 28 des Kopfteils 12 hin jeweils stumpfwinkelig mit einem zum Kopfteil 12 benachbarten ersten Schenkelabschnitt 30, einem daran anschließenden und zu der Symmetrie- bzw. Zentralachse 28 parallelen Befestigungsabschnitt 32 und einem daran anschließenden zweiten Schenkelabschnitt 34 ausgebildet.

Die zweiten Schenkelabschnitte 34 sind in dem Ausführungsbeispiel an ihrem freien Endabschnitt abgerundet ausgebildet, um beim Aufsetzen der Verbissschutzvorrichtung 10 auf einen gegen Verbiss zu schützenden Terminaltrieb eine Beschädigung desselben zu verhindern oder im Wachstumsprozess der Pflanze eine Beschädigung durch scharfe Ränder zu vermeiden.

In dem Ausführungsbeispiel sind der erste Schenkelabschnitt 30 und der zweite Schenkelabschnitt 34 eines jeweiligen länglichen Befestigungselements 14 zum Befestigungsabschnitt 32 hin mit konisch erweiterten Rändern 36, 38 ausgebildet. Der Befestigungsabschnitt 32 ist in dem Ausführungsbeispiel mit zueinander parallelen Rändern 38 ausgebildet.

Um bei einer guten mechanischen Stabilität optimale Federungseigenschaften der länglichen Befestigungselemente 14 zu erzielen, ist es vorteilhaft, wenn die ersten Schenkelabschnitte 30 der Befestigungselemente 14 von Laschen 38 des Kopfteils 12, insbesondere materialeinstückig, starr wegstehen, die jeweils von einem Paar Schlitzen 40 und/oder 42 begrenzt sind, die vom Umfangsrand 20 des Kopfteils 12 ausgehen.

Um sicherzustellen, dass ein vermittels der Verbissschutzvorrichtung 10 gegen Verbiss zu schützender Terminaltrieb nicht durch die Öffnungen 24, 26 in dem Kopfteil 12 wachsen kann, sind die Öffnungen 24, 26 in dem Ausführungsbeispiel jeweils mit einer Sperrstruktur 50 versehen, welche ein Durchwachsen eines Terminaltriebs durch die jeweilige Öffnung 24, 26 verhindert. Die Sperrstruktur 50 ist sonach eingerichtet, die Fläche der jeweiligen Öffnungen 24, 26, z. B. durch eine Reduzierung, zu versperren, sodass ein Durchwachsen eines Terminaltriebs durch die jeweiligen Öffnungen 24, 26 verhindert ist.

In dem in den Fig. gezeigten Ausführungsbeispiel umfassen die jeweiligen Sperrstrukturen 50 wenigstens ein stegartiges oder -förmiges Sperrelement 51. Die Fläche der jeweiligen Öffnung 24, 26 wird sonach durch wenigstens ein stegartiges oder -förmiges Sperrelement 51 reduziert, sodass ein Durchwachsen eines Terminaltriebs durch die jeweiligen Öffnungen 24, 26 verhindert ist.

Wenngleich nicht gezeigt, kann ein jeweiliges stegartiges oder -förmiges Sperrelement 51 selbst ein oder mehrere Öffnungen, etwa in Form von Schlitzen, aufweisen, um die Belüftung des von dem Kopfteil 12 umschlossenen Innenraums nicht zu beeinträchtigen.

In dem Ausführungsbeispiel erstrecken sich die stegartigen oder -förmigen Sperrelemente 51 jeweils von einem ersten Wandungsabschnitt einer eine jeweilige Öffnung 24, 26 begrenzenden Wandung des Kopfteils 12 in Richtung eines zweiten Wandungsabschnitts der die jeweilige Öffnung 24, 26 begrenzenden Wandung des Kopfteils 12. Die stegartigen oder -förmigen Sperrelement 51 teilen die Flächen der jeweiligen Öffnungen 24, 26 sonach in wenigstens zwei Teilflächen auf, welche ihrer Größe nach gegenüber der ursprünglichen Fläche der jeweiligen Öffnungen 24, 26 reduziert sind, sodass ein Durchwachsen eines Terminaltriebs durch die jeweiligen Öffnungen 24, 26 verhindert ist.

Die stegartigen oder -förmigen Sperrelemente 51 erstrecken sich in dem Ausführungsbeispiel von einem ersten Wandungsabschnitt der jeweiligen Öffnungen 24, 26 begrenzenden Wandungen des Kopfteils 12 vollständig bis zu einem zweiten Wandungsabschnitt der die jeweiligen Öffnungen 24, 26 begrenzenden Wandungen des Kopfteils 12.

Nicht in dem Ausführungsbeispiel gezeigt, jedoch grundsätzlich denkbar sind Ausführungsformen, in welchen ein oder mehrere stegartige oder -förmige Sperrelemente 51 in wenigstens zwei Abzweigungen aufgezweigt ausgebildet sind. Einzelne oder mehrere stegartige oder -förmige Sperrelemente 51 können sich sonach durch entsprechende Aufzweigung verästeln, sodass ein Durchwachsen eines Terminaltriebs durch die jeweiligen Öffnungen 24, 26 verhindert ist.

Ebenso nicht in dem Ausführungsbeispiel gezeigt, jedoch grundsätzlich denkbar sind Ausführungsformen, in welchen ein oder mehrere Sperrstrukturen 50 mehrere stegartige oder -förmige Sperrelemente 51 umfassen. Die mehreren stegartigen oder -förmigen Sperrelemente 51 können gleicher oder ungleicher Abmessungen sein und/oder gleiche oder ungleiche Grundformen aufweisen. Alternativ oder ergänzend können die mehreren stegartigen oder -förmigen Sperrelemente 51 in gleichen oder unterschiedlichen Ausrichtungen und/oder Positionen angeordnet oder ausgebildet sein.

Ebenso nicht in dem Ausführungsbeispiel gezeigt, jedoch grundsätzlich denkbar sind Ausführungsformen, in welchen eine oder mehrere Sperrstrukturen 50 wenigstens ein durch mehrere winklig zueinander angeordnete Gitterelemente gebildetes Sperrgitter umfassen. Eine Sperrstruktur 50 kann sonach gitterartig bzw. -förmig ausgebildet sein, was ebenso eine geeignete Maßnahme darstellt, um ein Durchwachsen eines Terminaltriebs durch eine jeweilige Öffnung 24, 26 zu verhindern.

Ebenso nicht in dem Ausführungsbeispiel gezeigt, jedoch grundsätzlich denkbar sind Ausführungsformen, in welchen eine oder mehrere Sperrstrukturen 50 durch wenigstens eine eine jeweilige Öffnung 24, 26 zumindest abschnittsweise, gegebenenfalls vollständig, verschließende zumindest gasdurchlässige, insbesondere luftdurchlässige, Membran gebildet sind. Eine Sperrstruktur 50 kann sonach als, gegebenenfalls geschlossene, jedoch gasdurchlässige, Membran ausgebildet sein, was ebenso eine geeignete Maßnahme darstellt, um ein Durchwachsen eines Terminaltriebs durch eine jeweilige Öffnung 24, 26 zu verhindern. Die Gasdurchlässigkeit der Membran stellt dabei sicher, dass dennoch eine ausreichende Belüftung des durch das Kopfteil 12 umschlossenen Innenraums möglich ist.

Unabhängig von ihrer konkreten geometrisch-konstruktiven Konfiguration kann jede Sperrstruktur 50 lösbar oder unlösbar an dem Kopfteil 12 befestigt sein.

Eine lösbare Verbindung einer Sperrstruktur 50 an dem Kopfteil kann z. B. dadurch realisiert sein, dass das Kopfteil 12, insbesondere im Bereich eines Wandungsabschnitts der eine jeweilige Öffnung 24, 26 begrenzenden Wandung, mit einer form- und/oder kraftschlüssigen Befestigungsschnittstelle und die Sperrstruktur 50 mit einer hierzu korrespondierenden form- und/oder kraftschlüssigen Gegenbefestigungsschnittstelle ausgebildet ist, wobei die kopfteilseitige Befestigungsschnittstelle und die sperrstrukturseitige Gegenbefestigungsschnittstelle eingerichtet sind, unter Ausbildung einer lösbaren Befestigung der Sperrstruktur 50 an dem Kopfteil 12 zusammenzuwirken. Mithin können die kopfteilseitige Befestigungsschnittstelle und die sperrstrukturseitige Gegenbefestigungsschnittstelle zueinander korrespondierende form- und/oder kraftschlüssige Befestigungselemente aufweisen, welche eingerichtet sind, miteinander unter Ausbildung einer lösbaren Befestigung der Sperrstruktur 50 an dem Kopfteil 12 zusammenzuwirken. Nicht-abschließend aufgezählte Beispiele für entsprechende form- und/oder kraftschlüssige Befestigungselemente sind Gewinde-, Klemm-, Rast- oder Spannelemente.

Eine unlösbare Verbindung einer Sperrstruktur 50 an dem Kopfteil 12 kann z. B. dadurch realisiert sein, dass die Sperrstruktur 50 stoffschlüssig an dem Kopfteil 12 befestigt ist; die Sperrstruktur 50 kann sonach z. B. einstückig, insbesondere materileinstückig, mit dem Kopfteil 12 ausgebildet oder durch eine stoffschlüssige Befestigungsmethode, wie z. B. Kleben oder Schweißen, insbesondere Ultraschallschweißen, stoffschlüssig an dem Kopfteil 12 befestigt sein.

## Patentansprüche

1. Verbissschutzvorrichtung (10) für Terminaltriebe von Bäumen, insbesondere Nadelbäumen, umfassend ein einen Innenraum umschließendes Kopfteil (12), wobei an dem Kopfteil (12) ein oder mehrere längliche Befestigungselemente (14) zur, insbesondere federnden, Befestigung der Verbissschutzvorrichtung (10) an wenigstens einem vermittels der Verbissschutzvorrichtung (10) zu schützenden Terminaltrieb angeordnet oder ausgebildet sind, wobei das Kopfteil (12) wenigstens eine Öffnung (24, 26) zur Belüftung des von dem Kopfteil (12) umschlossenen Innenraums aufweist, **dadurch gekennzeichnet, dass** die wenigstens eine Öffnung (24, 26) mit einer Sperrstruktur (50) versehen ist, welche ein Durchwachsen eines Terminaltriebs durch die wenigstens eine Öffnung (24, 26) verhindert.

2. Verbissschutzvorrichtung nach Anspruch 1, wobei die Sperrstruktur (50) wenigstens ein stegartiges oder-förmiges Sperrelement (51) umfasst.

3. Verbissschutzvorrichtung nach Anspruch 1 oder 2, wobei sich das wenigstens eine stegartige oder -förmige Sperrelement (51) von einem ersten Wandungsabschnitt einer die wenigstens eine Öffnung (24, 26) begrenzenden Wandung des Kopfteils (12) in Richtung eines zweiten Wandungsabschnitts der die wenigstens eine Öffnung (24, 26) begrenzenden Wandung des Kopfteils (12) erstreckt.

4. Verbissschutzvorrichtung nach Anspruch 3, wobei sich das wenigstens eine stegartige oder -förmige Sperrelement (51) von einem ersten Wandungsabschnitt einer die wenigstens eine Öffnung (24, 26) begrenzenden Wandung des Kopfteils (12) bis zu einem zweiten Wandungsabschnitt der die wenigstens eine Öffnung (24, 26) begrenzenden Wandung des Kopfteils (12) erstreckt.

5. Verbissschutzvorrichtung nach einem der Ansprüche 2 bis 4, wobei die Sperrstruktur (50) mehrere stegartige oder -förmige Sperrelemente (51) umfasst, welche in gleichen oder unterschiedlichen Ausrichtungen und/oder Positionen angeordnet oder ausgebildet sind.

6. Verbissschutzvorrichtung nach einem der Ansprüche 2 bis 4, wobei sich das wenigstens eine stegartige oder -förmige Sperrelement (51) in wenigstens zwei Abzweigungen aufzweigt.

7. Verbissschutzvorrichtung nach einem der vorhergehenden Ansprüche, wobei die Sperrstruktur (50) wenigstens ein durch mehrere winklig zueinander angeordnete Gitterelemente gebildetes Sperrgitter umfasst.

8. Verbissschutzvorrichtung nach einem der vorhergehenden Ansprüche, wobei die Sperrstruktur (50) durch wenigstens eine die wenigstens eine Öffnung (24, 26) zumindest abschnittsweise, gegebenenfalls vollständig, verschließende gasdurchlässige Membran gebildet ist.

9. Verbissschutzvorrichtung nach einem der vorhergehenden Ansprüche, wobei die Sperrstruktur (50) lösbar oder unlösbar an dem Kopfteil (12) befestigt ist.

10. Verfahren zur Herstellung einer Verbissschutzvorrichtung (10) für Terminaltriebe von Bäumen, umfassend die folgenden Schritte:
- Bereitstellen oder Herstellen eines einen Innenraum umschließenden Kopfteils (12), wobei an dem Kopfteil (12) ein oder mehrere längliche Befestigungselemente (14) zur, insbesondere federnden, Befestigung des Verbissschutzvorrichtung (10) an wenigstens einem vermittels der Verbissschutzvorrichtung (10) zu schützenden Terminaltrieb angeordnet oder ausgebildet sind, wobei das Kopfteil (12) wenigstens eine Öffnung (24, 26) zur Belüftung des von dem Kopfteil (12) umschlossenen Innenraums aufweist,
- Anordnen oder Ausbilden einer Sperrstruktur (50), welche ein Durchwachsen eines Terminaltriebs durch die wenigstens eine Öffnung (24, 26) verhindert, an oder in der wenigstens einen Öffnung (24, 26).
